# EUROPEAN PATENT SPECIFICATION

(11) **EP 3 471 552 B1**
(45) Date of publication and mention of the grant of the patent: **12.11.2025**
(21) Application number: 17814129.7
(22) Date of filing: 15.06.2017
(51) Int. Cl.: A23J 1/00, A23J 3/00, A23L 33/175, C07K 1/34

(54) **PROCESS FOR PREPARING A SOLUBLE PROTEIN COMPOSITION**
VERFAHREN ZUR HERSTELLUNG EINER LÖSLICHEN PROTEINZUSAMMENSETZUNG
PROCÉDÉ DE PRÉPARATION D'UNE COMPOSITION DE PROTÉINES SOLUBLE

(30) Priority: 15.06.2016 US 201662350456 P; 20.02.2017 US 201762461061 P; 20.02.2017 US 201762461058 P
(43) Date of publication of application: 24.04.2019
(73) Proprietor: International Dehydrated Foods, Inc., Springfield, MO 65808 (US)
(72) Inventor: DAKE, Roger L., Springfield, MO 65810 (US); CAPPOZZO, Jack C., Glen Ellyn, Illinois 60137 (US); LYNCH, Stephanie, Springfield, MO 65804 (US)
(74) Representative: Dehns Germany Partnerschaft mbB
(86) International application number: PCT/US2017/037759
(87) International publication number: WO 2017/218830

(56) References cited:
- WO-A1-2004/021797
- JP-A- 2007 166 989
- US-A- 4 420 425
- US-A- 4 420 425
- US-A- 4 663 048
- US-A1- 2006 172 058
- US-A1- 2010 028 525
- US-A1- 2012 171 352
- US-A1- 2012 252 065
- US-A1- 2015 305 368
- NAZIR AKMAL ET AL: "Membrane separation technology for the recovery of nutraceuticals from food industrial streams", TRENDS IN FOOD SCIENCE AND TECHNOLOGY, vol. 86, 13 February 2019 (2019-02-13), pages 426 - 438, XP085640018, ISSN: 0924-2244, DOI: 10.1016/J.TIFS.2019.02.049

## Description

### BACKGROUND

### Field of the Invention

This disclosure relates to a process for making a composition according to the claims.

### Description of Related Art

Broth prepared from animal (including poultry) or plant sources has high nutrition values and may be used as ingredients in preparing many food products and beverages. However, protein quality varies among different protein products. Most existing protein preparations lack in protein quality and uniformity. Many existing protein preparations do not have high proportions of essential or indispensable amino acids or do not have high concentration of specific desirable nutrients.
US 4,663,048 A discloses a method for extracting a basic amino acid from its fermentation broth or treated broth liquids by filtering through a semi-permeable membrane to remove high-molecular weight impurities, then purifying the amino acid by adsorption on a strong acid cation exchange resin, followed by elution.
US 4,420,425 A discloses a method for producing proteins from nonbinding oilseeds like soybeans and peanuts, involving solubilization and ultrafiltration. Proteins are extracted into a feed using water and oil seeds, then filtered through an ultrafiltration membrane with a >70,000 Dalton cutoff. This process is regulated to remove color and flavor-contributing fractions into the permeate.
WO 2004/021797 A1 discloses a method for obtaining a protein-free mix of free amino acids and short peptides through enzymatic hydrolysis and separation of raw protein materials. It also describes producing a low-fat, low-salt protein product rich in amino acids and peptides. Additionally, it involves a process where hydrolyzed protein material is filtered to separate amino acids and peptides, with enzymes degrading any residual proteins and being recycled in the system. The invention includes the resulting products and their uses.
JP 2007/166989 A discloses a method for treating bony parts of fish comprising boiling collected bony parts of fish, subjecting the boiled product thus obtained to solid-liquid separation to collect boiled solid and stick water, centrifuging the stick water in a high temperature condition to collect protein liquid, membrane filtering at least part of the protein liquid thus obtained in multistages to collect collagen from the filtrate thus obtained, and further collecting amino acid by ion exchange from filtrate obtained in the end of the membrane filtration process.

### SUMMARY

The invention is set out in the appended set of claims. Particularly, instrumentalities disclosed herein provide methods for making broth compositions containing higher levels of certain amino acids, or other compounds. Particularly, the disclosure provides methods for preparing a high quality soluble protein composition. Particularly, the disclosure also provides methods for making broth compositions containing reduced levels of certain ingredients, such as, by way of example, sodium.

In one embodiment, the composition is prepared from an animal source in the presence of an added enzyme. As claimed, the starting material is from a poultry source.

In one aspect, the filtration step may result in protein fractions enriched in certain essential amino acids. In another aspect, this filtration step may result in protein fractions having certain amino acids or other compounds at a concentration higher than their naturally occurring proportions. In another aspect, this filtration means may specifically retain components such as collagen protein, or peptides such as taurine, anserine, carnosine, creatine/creatinine, L-carnitine, choline. In another aspect, the filtration means may specifically retain BCAA or EAA. In another aspect, this filtration means of this disclosure may specifically allows sodium to pass through. In another aspect, the filtration means may have pore size between 100 nanometer (nm) and 500 nm, between 100 nm and 200 nm, between 10 nm and 50 nm, or between 50 nm and 100 nm.

The amino acids or compounds that are enriched may generally include but are not limited to collagen protein, peptides such as taurine, anserine, carnosine, creatine/creatinine, L-carnitine, choline, and many other specific nutrients of value.

One or more enzymes may generally be used in the process of making the initial composition to be applied to the filtration means, e.g., the soluble protein composition. In another embodiment, a pressure cooking step may be employed in the disclosed process. It has been unexpectedly discovered that the disclosed process produces higher quality proteins by improving the amino acid composition and ratio extracted from normal raw materials. The soluble protein composition may generally contain more than 70%, 80%, 85%, or 90% (w/w) of protein but less than 5%, 3%, 2%, 1%, or 0.5% (w/w) of fat. Generally, more than 70%, 80%, 90%, 95% or 99% (w/w) of the proteins in the composition is soluble in water. Generally, more than 70%, 80%, 90%, 95% or 99% (w/w) of the proteins in the composition is soluble in water at room temperature and under normal pressure. In another embodiment, more than 70%, 80%, 90%, 95% or 99% (w/w) of the proteins in the composition is soluble in water after being heated to a temperature of at least 82 °C (180F), or 93 °C (200F).

The composition may generally be used in a final product with or without dilution, as a concentrate, or in a dry form.

The product of this disclosure may generally provide a high quality, complete animal protein powder from poultry (or other sources) that is completely soluble. Soluble protein is valuable for applications in beverages and other foods where particulates are not desired. Soluble protein is also advantageous in preparation of special foods that must be administered through tube feeding.

The percentage of tryptophan by weight of total amino acids in the disclosed soluble protein composition may generally be greater than 0.6%, 0.7%, or 0.8%. The percentage of hydroxyproline by weight of total amino acids in the disclosed soluble protein composition may generally be less than 2% or less than 3%.

The composition collected in step (c) may be low in sodium.

The amount of branched chain amino acids (BCAA) in the composition of the disclosure obtained in step (c) is at least 20%, particularly at least 30%, 40%, or 50% higher than the amount of BCAA in the composition in the starting material. BCAA constitute more than 6%, particularly more than 8%, 10%, or 12% (w/w) of total amino acids in the composition obtained in step (c) above.

The amount of essential amino acids (EAA) in the composition obtained in step (c) above may be at least 20% higher than the amount of EAA in the composition in the starting material. Optionally, EAA may constitute more than 25%, 30%, 33%, or 35% (w/w) of total amino acids in the composition obtained in step (c) above.

The level of sodium in the composition obtained in step (c) above is at least 50%, particularly at least 80%, or 100% lower than the level of sodium in the starting material. For purpose of this disclosure, when the level of a substance in composition A is 100% lower than that in composition B, it means that the level of the substance in composition A is 50% of the level of the substance in composition B. In one aspect, sodium may constitute less than 1%, particularly less than 0.5% (w/w) based on total solids in the composition obtained in step (c).

In one embodiment, the color of the composition obtained in step (c) is different from the color of the starting material. For example, the color of the composition obtained in step (c) may be significantly lighter than the color of the starting material. In one aspect, the difference in color may be determined by human eyes and two colors are significantly different if the color difference can be readily distinguished by human eyes. In another aspect, the difference in color may be determined by an instrument.

In another embodiment, examples of filtration means may include but are not limited to microfiltration, ultrafiltration, nanofiltration, reverse osmosis, membrane and combination thereof.

In one embodiment not forming part of the invention, a method of preparing a broth composition by cooking a previously cooked broth is disclosed. This method may include the following steps: (a) incubating a first mixture at an elevated temperature of at least 40 C, for example, between 50-120 C for a period of time of at least 5 minutes, for example, between 10 minutes and 96 hours; (b) separating the liquid fraction from the solid fraction of the first mixture after step (a); and (c) collecting the liquid fraction of step (b). The first mixture may contain a liquid fraction and a solid fraction. In one aspect, at least the solid fraction of the first mixture has been cooked prior to step (a).

The composition collected in step (c) may, in this embodiment not forming part of the invention, also be referred to as a "second-cooked broth." In one aspect, the entire first mixture may be referred to as a "first-cooked broth." In another aspect, the solid and liquid fractions of the first-cooked broth have been separated prior to step (a) and fresh liquid fraction is added to the solid fraction of the first-cooked broth prior to step (a). In another aspect, the first-cooked broth or the solid fraction of the first-cooked broth has been refrigerated prior to step (a).

In one example of this embodiment not forming part of the invention, the incubation of step (a) may take place under pressure. By way of the example, the pressure may be between 0.1 psig to 50 psig, or between 1 psig to 20 psig.

In another example of this embodiment not forming part of the invention, the amount of branched chain amino acids (BCAA) in the composition obtained in step (c) is at least 20% higher than the amount of BCAA in the first mixture prior to the incubation in step (a).

In another example of this embodiment not forming part of the invention, the disclosed process may further include a step (d) of applying the liquid fraction collected in step (c) to a filtration means and a step (e) of collecting retentate or permeate after the filtration step (e).

A method of preparing a broth composition directly from raw materials is disclosed, but does not form part of the invention. The method may include steps of cooking raw meat/bone or other animal parts more than once. This method may include the following steps: (a) mixing animal parts with water or an aqueous solution to form a mixture, (b) incubating the mixture of step (a) at an elevated temperature of at least 40 C, for example, between 50-120 C, for a period of time of at least 5 minutes, for example, between 10 minutes and 96 hours, (c) removing liquid fraction from solid fraction after step (b), (d) incubating the solid fraction obtained from step (c) with water or an aqueous solution at an elevated temperature of at least 40 C, for example, between 50-120 C, for a period of time of at least 5 minutes, for example, between 10 minutes and 96 hours, e) removing solid fraction from liquid fraction after step (d), and (f) collecting the liquid fraction from step (e). In another embodiment, this method may further include step (g) applying the liquid fraction collected in step (f) to a filtration means, and step (h) collecting retentate or permeate. The filtration means may have a pore size of 200 nm, 100 nm, 50 nm or smaller.

The starting material may be prepared from raw animal parts, for example, meat, cartilage, or bones. Animal source is poultry sources.

The starting material may be prepared from raw mechanically separated poultry (MSP), mechanically separated chicken (MSC), or finely ground poultry pieces (such as poultry trims or ground poultry parts) with water at room temperature or lower. By way of example, the first extraction (i.e., first cook) may be conducted by adding water into raw MSC. The mixture can then be stirred to facilitate mixing and extracting. The ratio between the MSC and water in the extraction mixture may range from about 4:1 to about 1:20 by weight, from about 1:1 to about 1:4 by weight, or about 1:2 by weight. The MSC and water mixture may be subject to centrifugation at the end of the extraction. The starting material may be prepared on-site and may be used for making the present composition right after it is made fresh on-site. Alternatively, the starting material may be from packaged products or may be collected off-site.

The starting material may be in a substantially liquid form which contains significant amount of poultry sarcoplasm. The term "substantially liquid form" means that the starting material is mostly liquid but may contain minor amount of insoluble material. For instance, the starting material may be in the form of a raw liquid collected from a poultry processing plant or from a poultry storage container or package. Then starting material may be liquid that typically exudes from cut and exposed muscle or bone tissues. This liquid is also known as muscle serum or myogen.

The starting material may appear reddish because it may contain the natural myoglobin, and/or intracellular liquid, sarcoplasm, and/or sarcoplasmic reticulum with its proteins, minerals, and metabolites.

The disclosed composition thus obtained may be used in many food products. Examples of such products may include but are not limited to snacks, comfort food, pastry, protein drink, smoothies, sports drink or nutritional beverages, among others.

### DETAILED DESCRIPTION

This disclosure relates to a process for making a high protein composition from an animal source being a poultry source. In one aspect, the disclosed process may be used to make a broth composition high in branched chain amino acids (BCAA) and low in sodium.

The composition may be prepared by cooking a previously cooked composition before being subject to the filtration separation step. In one aspect, it is disclosed that the levels of branched chain amino acids (BCAA) are higher from a second extractive cooking.

The disclosure provides methods of making a high quality protein composition from poultry. Chicken broth is widely used in many traditional foods such as soups, stews, chowders, gravies, and sauces. As compared to other broth products, the disclosed compositions are easier to handle and provide a better balance of proteins and amino acids than regular broth prepared according to conventional methods.

In one aspect, the disclosed process may be used to turn lower value raw poultry materials into a high value protein powder or broth without using additives.

The compositions of the disclosure may be used as an ingredient in traditional food products, snack, or beverage products. The disclosed composition may also be used to prepare protein drinks, smoothies, or other nutritional or sport beverages.

It is to be noted that, as used in this specification and the claims, the singular forms "a," "an," and "the" include plural referents unless the context clearly dictates otherwise. Thus, for example, reference to "a device" may include reference to one device, as well as two or more devices, unless the context clearly limits the reference to one device.

The terms "between" and "at least" as used herein are inclusive. For example, a range of "between 5 and 10" means any amount equal to or greater than 5 but equal to or smaller than 10.

### Examples

### Example 1 Preparation of a broth composition by cooking twice

Mechanically separated chicken was cooked in 5-10% water (v/v) in an open vessel at about 185 F for about 10-15 minutes to obtain cooked meat pieces simmering in brothy liquid. The resulting liquid was separated from solid by gravity separation and screening. The resulting broth (or liquid, also called "first cook broth") was tested for amino acid profile and mineral content.

The fully cooked meat after liquid removal was added to two parts water and thoroughly mixed. It was cooked at 15 psig pressure at 121°C for 6 hours, and allowed to cool overnight.

The resulting broth was separated from the meat by screening. This broth (called "second cook broth") was tested for amino acid profile and sodium content. The second cook broth had significantly higher BCAA content at 11% (calculated based on 100% solid basis), as compared to BCAA content of 5% (calculated based on 100% solid basis) for the first cook broth (Table 1).

The second cook broth was passed through a 0.2 micron hollow fiber membrane resulting in a retentate that contained higher levels of BCAA than the permeate. The retentate also contained higher levels of essential amino acids (EAA) than the permeate, at 31% as compared to 27% in the permeate (Table 1).

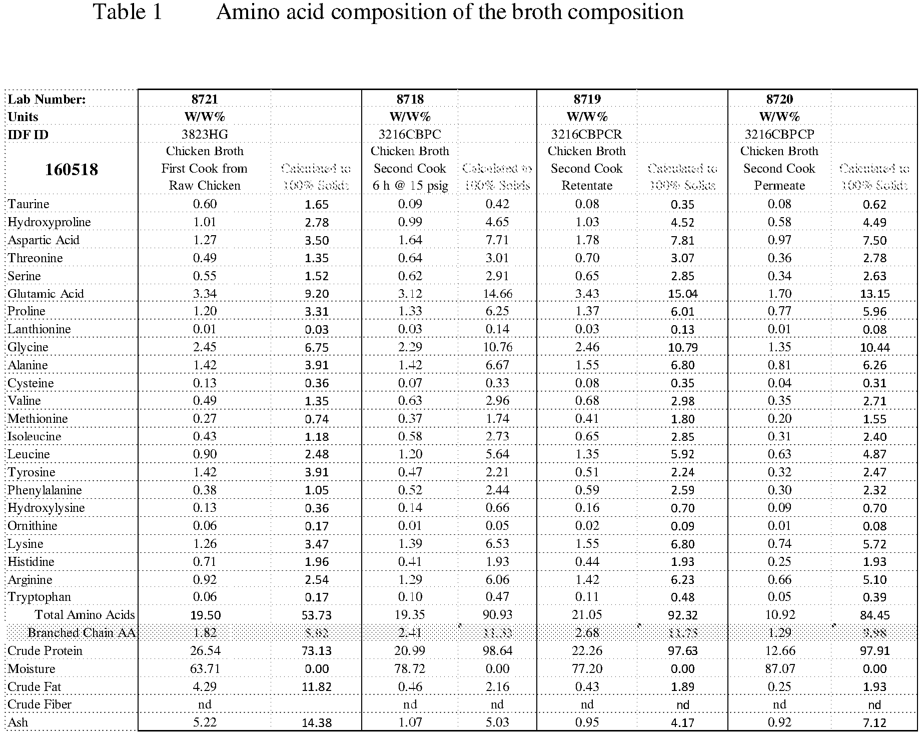

As shown in Table 1, without being subject to filtration, the second cook broth contained significantly higher amount of BCAA than first cook broth. The level of BCAA in the first cook broth ranged from 4.6% to 5.1%, while second cook broth samples from the same material stream ranged from 9 to 12%, both calculated based on 100% solid basis.

Sodium levels were also monitored. Sodium levels in the second cook broth were lower than first cook broth. First cook broth samples (on a solids basis) historically range from 1.9% to 2.2% (w/w) sodium, while second cook broth samples ranged from 0.56 to 0.65% (w/w).

### Example 2 Preparation of Bone Broth with Reduced Sodium

Raw chicken bones are cooked in a large system in a plant at a minimum of 102°C for a minimum of 30 minutes. Broth liquid is separated from the insoluble fraction and the fat. A sample of the first cook broth is analyzed for sodium. The cooked bones are added to two parts water and cooked a second time using the same temperature and time, and the resulting broth is again analyzed for sodium, which is lower than the sodium level of the first cook.

### Example 3 Preparation of a broth composition with reduced sodium by filtration

Concentrated frozen chicken bone broth (a first cook broth made from ground raw chicken bones) was reconstituted to around 13% solids and passed through a 50 nanometer ceramic membrane. On a solids basis, the feed broth had 2.33% sodium. The Permeate had 3.3% sodium compared to 1.68% sodium in retentate. The retentate from membrane separation had only 72% of the sodium in the feed sample, showing that membrane separation also can be used to make a reduced sodium broth without a second cook.

### Example 4 Preparation of a broth composition with lighter color by filtration

Bone broth concentrate from plant was diluted and heated to a temperature of 145 F. The heated broth was pumped through a 0.2 micron hollow fiber membrane. The first permeate was collected. It was clear but had a medium brown color, with roasted notes. This permeate was pumped through a 3 kilo-dalton (KD) hollow fiber membrane. The second permeate was collected. The second permeate from the 3 KD membrane was light yellow, much lighter than the first permeate.

### Example 5 Filtration of broth prepared from poultry and beef

Mechanically Separated Chicken (MSC) from a poultry plant and Ground Beef from the supermarket were separately processed using the process of this disclosure to produce cooked soluble protein liquids. Each raw meat material was mixed with two parts of carbonated water, and two protease enzymes were mixed well into each batch. A fungal protease was added at 0.7 percent of solids, and papain was added at 0.01% of solids. The temperature was increased to 122°F (50° C.) and the mixture was incubated for 2 hours. Then, the temperature was increased to 176°F (80° C.) and the batch was incubated for one additional hour. The enzymes were deactivated by heating the batch to boiling for 15 minutes. The product was passed through a fine screen to remove undissolved solids from the liquid fraction, and the liquid fraction was separated into broth and fat fractions.

The broth fraction was then pumped through a 0.2 micrometer hollow fiber membrane and the permeate collected. The permeate was then passed through a 100 kilo-Dalton hollow fiber membrane and this permeate was collected and reduced to over 60% solids on stove top. The soluble liquid concentrates from the chicken and beef were each analyzed for crude protein, fat, ash, and amino acid profile (Table 2). These soluble protein concentrates were then formulated into standard rat diets for a feeding study for protein efficiency ratio.

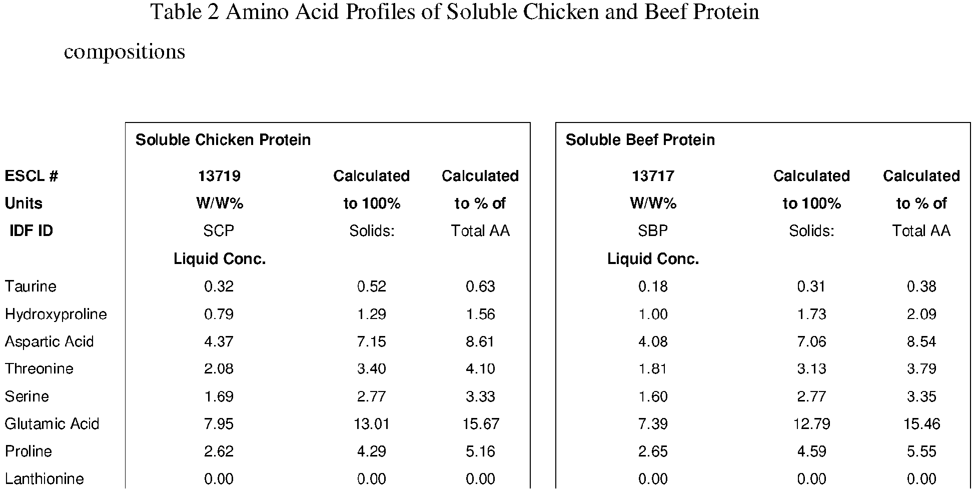

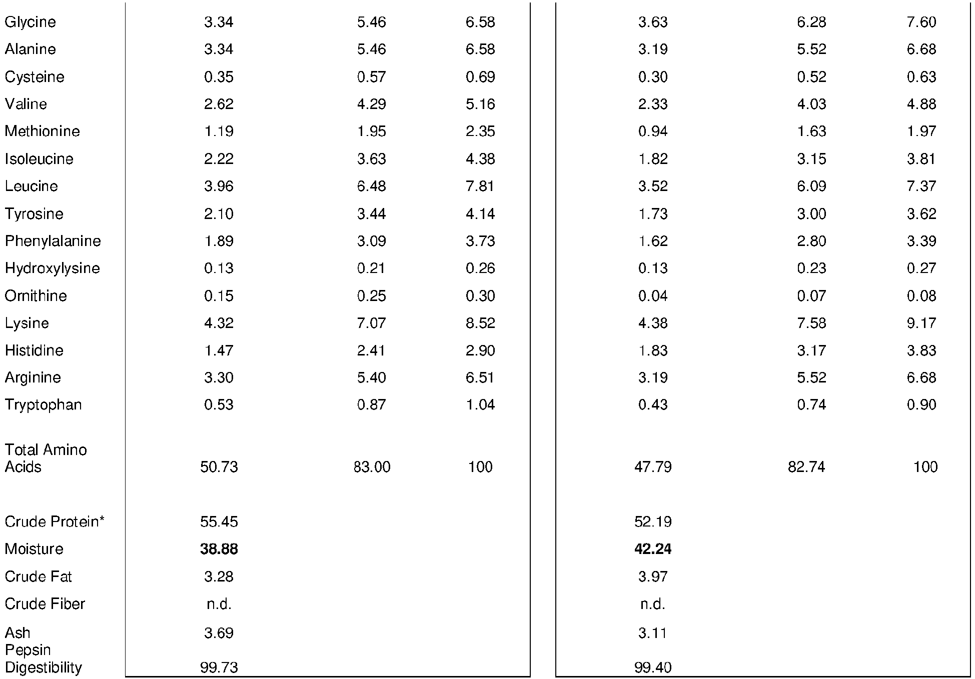

### Example 6 Membrane separation enriches certain component in the retentate or permeate

Fresh chicken bone broth was obtained from a production plant. It had 8.8% solids content before passing through the membrane system.

The membrane used was a tangential hollow fiber membrane filter. The membrane fiber was a modified polyethersulfone with a pore size of 0.20 micron. The hollow fibers were 1 mm in diameter and 20 cm in length with a cross sectional area of 75 cm².

The membrane process produced a permeate liquid that was visually clear with a solids content of 1.6%, and a retentate stream with a solids content of 11.6% solids. The permeate comprised about 29% of the total product volume collected and the retentate fraction was 71%.

Samples of permeate, retentate and the original sample feeding into the membrane system were sent to an outside laboratory for amino acid analysis (Table 3). Both the analysis as reported are listed as well as these results standardized to an equal 100% solids basis, which is close to the solids content of spray dried powder products. The Permeate appeared to have significantly higher amount of Taurine than the amount of Taurine in the starting broth. The permeate may be higher in tyrosine and histidine than starting broth.

Retentate had higher levels of collagen related amino acids than the levels in the starting bone broth. The Retentate had about 5% higher in collagen protein (calculated by hydroxyproline X 8). This process may be used when higher collagen protein in the diet is desirable.

Permeate had significantly lower levels of amino acids related to collagen proteins. This observation is of value in certain market segments like sports nutrition, specifically body building, where collagen proteins are often avoided.

Specific nutrients of value were concentrated by the methodology of this disclosure. It can also be seen in this example that some nutrients may be concentrated in the retentate (fraction that does not pass through the membrane) or reduced while other compounds are concentrated/reduced in the permeate (fraction that passes through the membrane.). The disclosed product streams have increased value to consumers through the partitioning, reduction, or concentration of individual nutrition compounds into the separated fractions.

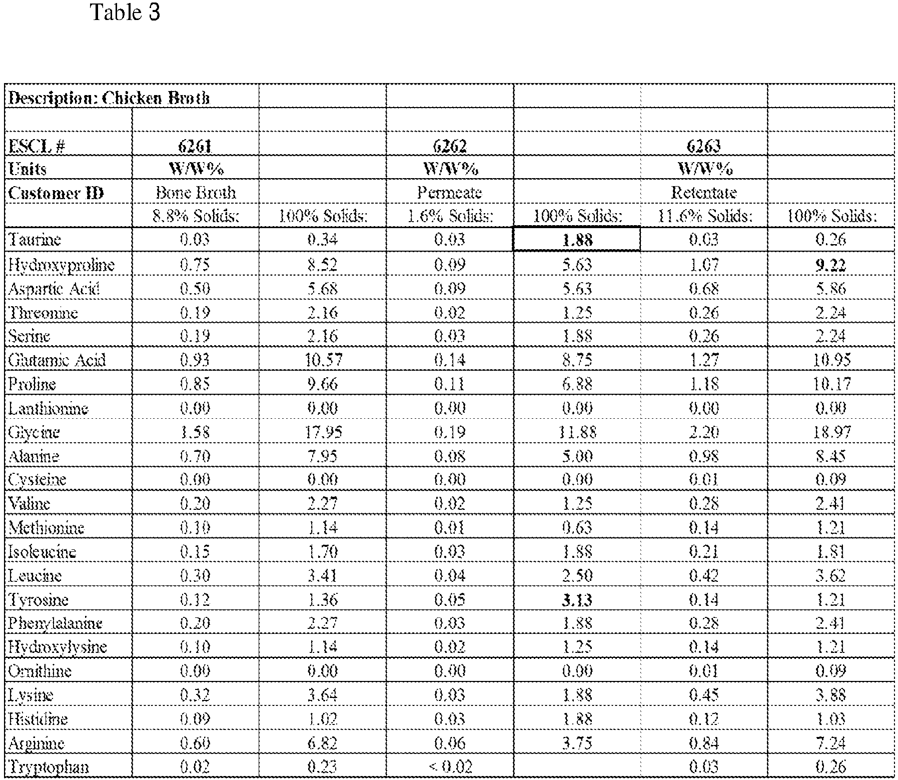

### Example 7

Fresh mechanically separated chicken (MSC) was obtained from a production plant and mixed with equal weight of water. Two protease enzymes (Enzyme Development Corporation Enzymes Alkaline and FNP) were mixed in well at 0.07% of the MSC weight. The mixture was incubated for 2 hours at 140°F. Then, the mixture was cooked in a pressure cooker at 15 psig for two hours. This step completely deactivated the enzymes as well as extracting a generous amount of soluble chicken protein broth. The soluble protein fraction was separated from the fat and insoluble fractions by centrifugation and screening. The resultant liquid protein was frozen and stored, then thawed for this test.

The broth was diluted to a solids content of 12.6%, and passed through a membrane. The membrane used was a tangential hollow fiber membrane filter. The membrane fiber was a modified polyethersulfone (mPES) with a pore size of 0.20 micron. The hollow fibers were 1 mm in diameter and 20 cm in length with a cross sectional area of 75 cm².

The membrane process produced a permeate liquid that was visually clear with a solids content of 11.3%, and a retentate stream with a solids content of 13.6% solids. The permeate comprised 56% of the total volume and retentate 44% by volume.

Samples of permeate, retentate and the original sample feeding into the membrane system were sent to an outside laboratory for amino acid analysis (Table 4). The analysis as reported is listed along with these results standardized to an equal 100% solids basis, which is close to the solids content of spray dried powder products.

It can be seen that the ash content is higher in the permeate. This is an indication that a higher percentage of dissolved minerals is passing through the membrane into this fraction. Minerals in an easily assimilated soluble state provide an added health value to the product.

**Table 4 Chicken Broth Fractions From Membrane Separation Process**

| Lab No: Units | 7486 W/W% | | 7487 W/W% | | 7488 W/W% | |
|---|---|---|---|---|---|---|
| Sample ID | 38.9HN | Calculated to | 13.6HNR | Calculated to | 11.3HNP | Calculated to 100% |
| | **Feed Broth** | 100% Solids | **Retentate** | 100% Solids | **Permeate** | Solids |
| Taurine | 0.15 | 0.39 | 0.05 | 0.49 | 0.05 | 0.42 |
| Hydroxyproline | 0.57 | 1.47 | 0.21 | 2.07 | 0.13 | 1.10 |
| Aspartic Acid | 2.92 | 7.51 | 1.05 | 10.34 | 0.88 | 7.46 |
| Threonine | 1.33 | 3.42 | 0.48 | 4.73 | 0.40 | 3.39 |
| Serine | 1.06 | 2.73 | 0.38 | 3.74 | 0.32 | 2.71 |
| Glutamic Acid | 5.18 | 13.32 | 1.89 | 18.62 | 1.59 | 13.49 |
| Proline | 1.48 | 3.81 | 0.56 | 5.52 | 0.42 | 3.56 |
| Lanthionine | 0.05 | 0.13 | 0.01 | 0.10 | 0.01 | 0.08 |
| Glycine | 2.17 | 5.58 | 0.84 | 8.28 | 0.62 | 5.26 |
| Alanine | 2.14 | 5.50 | 0.78 | 7.68 | 0.65 | 5.51 |
| Cysteine | 0.19 | 0.49 | 0.07 | 0.69 | 0.05 | 0.42 |
| Valine | 1.57 | 4.04 | 0.56 | 5.52 | 0.48 | 4.07 |
| Methionine | 0.79 | 2.03 | 0.28 | 2.76 | 0.23 | 1.95 |
| Isoleucine | 1.45 | 3.73 | 0.51 | 5.02 | 0.44 | 3.73 |
| Leucine | 2.49 | 6.40 | 0.88 | 8.67 | 0.77 | 6.53 |
| Tyrosine | 1.34 | 3.45 | 0.41 | 4.04 | 0.37 | 3.14 |
| Phenylalanine | 1.16 | 2.98 | 0.39 | 3.84 | 0.34 | 2.88 |
| Hydroxylysine | 0.10 | 0.26 | 0.03 | 0.30 | 0.02 | 0.17 |
| Ornithine | 0.28 | 0.72 | 0.10 | 0.99 | 0.09 | 0.76 |
| Lysine | 2.86 | 7.35 | 1.04 | 10.25 | 0.86 | 7.29 |
| Histidine | 0.95 | 2.44 | 0.35 | 3.45 | 0.30 | 2.54 |
| Arginine | 1.84 | 4.73 | 0.70 | 6.90 | 0.54 | 4.58 |
| Tryptophan | 0.34 | 0.87 | 0.11 | 1.08 | 0.09 | 0.76 |
| Total Amino Acids | 32.41 | 83.34 | 11.68 | 115.07 | 9.65 | 81.85 |
| Crude Protein | 34.90 | 89.74 | 12.64 | 124.53 | 10.46 | 88.72 |
| Moisture | 61.11 | 0.00 | 89.85 | 0.00 | 88.21 | 0.00 |
| Crude Fat | 2.37 | 6.09 | 0.53 | 5.22 | 0.26 | 2.21 |
| Crude Fiber | 0.00 | 0.00 | 0.00 | 0.00 | 0.00 | 0.00 |
| Ash | 2.00 | 5.14 | 0.70 | 6.90 | 0.65 | 5.51 |
| EAA for IOM total | | 33.27 | | 45.32 | | 33.16 |
| BCAA Total | | 14.17 | | 19.21 | | 14.33 |
| % collagen protein | | 11.73 | | 16.55 | | 8.82 |

### Example 8

An in-process chicken broth with 3.4% solids content was collected from plant operations. This broth is typically cloudy containing some amount of emulsified lipids and phospholipids, and was found to contain 15.7 mg/100 grams total choline or 641.8 mg/100g total choline calculated to a solids basis. After passing this broth through the membrane column of example one, 70% permeate and 30% retentate by volume was obtained. The retentate with 9.1% solids contained 50.1 mg/100 grams total choline. This calculated to 550.5 mg/100g on a solids basis. The permeate with 2.3% solids contained <1 mg/100 grams total choline and was crystal clear with no cloudy, fatty emulsion.

This results shows that virtually no lipid based materials with choline passed through the membrane, effectively removing a specific compound from the permeate product and showing the utility of the membrane system for the purpose of removing compounds by fractionation based on molecular size.

On the other hand, a retentate product was saved with a valuable nutrition compound to be processed further, added to another product to boost nutritive value, or sold for its own merit.

In addition to the data on choline above, total and free amino acid analyses were done on the same samples with the following results (Table 5) for the data which has been calculated to 100% solids for comparability.

The results show that on a solids basis, total amino acids of permeate increased while retentate amino acid content decreased. The same was true of branched chain amino acids. Also, the amount of valued essential amino acids and taurine increased dramatically in the permeate while decreasing in the retentate.

It is noteworthy that hydroxyproline, used to calculate collagen protein content, is lower in the permeate sample, indicating a reduction of collagen protein in this fraction.

From the physiological free amino acid assay, it was observed that total anserine and carnosine concentration increased dramatically in the permeate while decreasing in the retentate.

The permeate fraction was notably higher in glutamic acid, glutamine, and taurine.

These results further support the utility of the membrane system for adding nutritional value to a product stream.

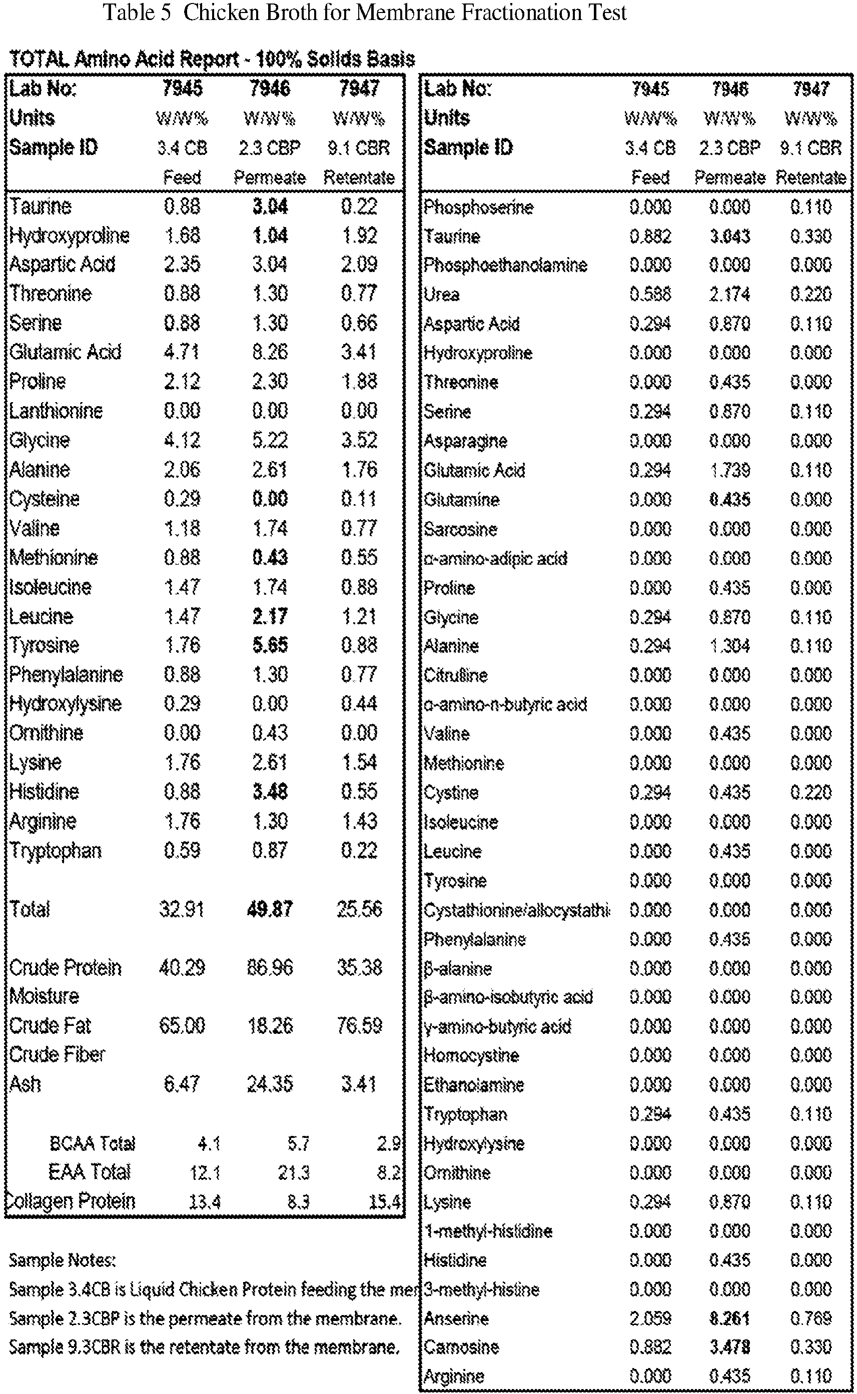

## Claims

1. A method of making a composition, comprising:
(a) applying a starting material to a filtration means, wherein said filtration means has a pore size of 100 nanometers (nm) or smaller and specifically retains branched chain amino acids (BCAA),
(b) allowing the starting material to pass through the filtration means, and
(c) collecting retentate to obtain said composition;
wherein the starting material is a broth composition prepared from a poultry source, and wherein branched chain amino acids (BCAA) constitute more than 6% (w/w) of total amino acids in the composition obtained in step (c), and the amount of branched chain amino acids (BCAA) in the composition obtained in step (c) is at least 20% higher than the amount of BCAA in the starting material.

2. The method of claim 1, wherein the amount of essential amino acids (EAA) in the composition obtained in step (c) is at least 20% higher than the amount of EAA in the composition in the starting material, especially wherein EAA constitute more than 33% (w/w) of total amino acids in said composition obtained in step (c).

3. The method of claim 1, wherein the level of sodium in the composition obtained in step (c) is at least 50% lower than the level of sodium in the starting material, especially wherein sodium constitutes less than 1% (w/w) based on total solids in said composition obtained in step (c).

4. The method of claim 1, wherein said filtration means is selected from the group consisting of microfiltration, ultrafiltration, nanofiltration, reverse osmosis, membrane and combination thereof.

5. The method of claim 1, wherein said starting material is prepared from animal parts in the presence of an added enzyme.

6. The method of claim 1, further comprising a step of drying the retentate and/or permeate obtained in step (c).

7. The method of claim 1, wherein the color of the composition obtained in step (c) is different from the color of the starting material, especially wherein the color of the composition obtained in step (c) is substantially lighter than the color of the starting material.

## Patentansprüche

1. Verfahren zur Herstellung einer Zusammensetzung, umfassend:
(a) Aufbringen eines Ausgangsmaterials auf ein Filtrationsmittel, wobei das Filtrationsmittel eine Porengröße von 100 Nanometern (nm) oder weniger aufweist und spezifisch verzweigtkettige Aminosäuren (BCAA) zurückhält,
(b) Durchlassen des Ausgangsmaterials durch die Filtereinrichtung und
(c) Sammeln des Rückstands, um die Zusammensetzung zu erhalten;
wobei das Ausgangsmaterial eine aus Geflügel hergestellte Brühe ist und wobei verzweigtkettige Aminosäuren (BCAA) mehr als 6 % (Gew./Gew.) der gesamten Aminosäuren in der in Schritt (c) erhaltenen Zusammensetzung ausmachen und die Menge an verzweigtkettigen Aminosäuren (BCAA) in der in Schritt (c) erhaltenen Zusammensetzung mindestens 20 % höher ist als die Menge an BCAA im Ausgangsmaterial.

2. Verfahren nach Anspruch 1, wobei die Menge an essentiellen Aminosäuren (EAA) in der in Schritt (c) erhaltenen Zusammensetzung mindestens 20 % höher ist als die Menge an EAA in der Zusammensetzung in dem Ausgangsmaterial, insbesondere wobei EAA mehr als 33 % (Gew./Gew.) der Gesamtaminosäuren in der in Schritt (c) erhaltenen Zusammensetzung ausmachen.

3. Verfahren nach Anspruch 1, wobei der Natriumgehalt in der in Schritt (c) erhaltenen Zusammensetzung mindestens 50 % niedriger ist als der Natriumgehalt in dem Ausgangsmaterial, insbesondere wobei Natrium weniger als 1 % (Gew./Gew.) bezogen auf die Gesamtfeststoffe in der in Schritt (c) erhaltenen Zusammensetzung ausmacht.

4. Verfahren nach Anspruch 1, wobei die Filtrationsvorrichtung aus der Gruppe ausgewählt ist, die aus Mikrofiltration, Ultrafiltration, Nanofiltration, Umkehrosmose, Membran und Kombinationen davon besteht.

5. Verfahren nach Anspruch 1, wobei das Ausgangsmaterial aus tierischen Teilen in dem in Gegenwart eines zugesetzten Enzyms hergestellt wird.

6. Verfahren nach Anspruch 1, das ferner einen Schritt des Trocknens des in Schritt (c) erhaltenen Retentats und/oder Permeats umfasst.

7. Verfahren nach Anspruch 1, in dem die Farbe der in Schritt (c) erhaltenen Zusammensetzung sich von der Farbe des Ausgangsmaterials unterscheidet, insbesondere in dem die Farbe der in Schritt (c) erhaltenen Zusammensetzung wesentlich heller ist als die Farbe des Ausgangsmaterials.

## Revendications

1. Procédé de fabrication d'une composition, comprenant :
(a) appliquer un matériau de départ sur un moyen de filtration, dans lequel ledit moyen de filtration a une taille de pores de 100 nanomètres (nm) ou moins et retient spécifiquement les acides aminés à chaîne ramifiée (BCAA),
(b) laisser le matériau de départ passer à travers le moyen de filtration, et
(c) collecter du rétentat pour obtenir ladite composition ;
dans lequel le matériau de départ est une composition de bouillon préparée à partir d'une source de volaille, et dans lequel les acides aminés à chaîne ramifiée (BCAA) constituent plus de 6 % (p/p) des acides aminés totaux dans la composition obtenue à l'étape (c), et la quantité d'acides aminés à chaîne ramifiée (BCAA) dans la composition obtenue à l'étape (c) est au moins 20 % supérieure à la quantité de BCAA dans le matériau de départ.

2. Procédé selon la revendication 1, dans lequel la quantité d'acides aminés essentiels (EAA) dans la composition obtenue à l'étape (c) est supérieure d'au moins 20 % à la quantité d'EAA dans la composition du matériau de départ, en particulier dans lequel les EAA constituent plus de 33 % (p/p) des acides aminés totaux dans ladite composition obtenue à l'étape (c).

3. Procédé selon la revendication 1, dans lequel le niveau de sodium dans la composition obtenue à l'étape (c) est inférieur d'au moins 50 % au niveau de sodium dans la matière première, en particulier dans lequel le sodium constitue moins de 1 % (p/p) par rapport au total des solides dans ladite composition obtenue à l'étape (c).

4. Procédé selon la revendication 1, dans lequel ledit moyen de filtration est sélectionné parmi le groupe comprenant la microfiltration, l'ultrafiltration, la nanofiltration, l'osmose inverse, la membrane et leur combinaison.

5. Procédé selon la revendication 1, dans lequel ledit matériau de départ est préparé à partir de parties animales en présence d'une enzyme ajoutée.

6. Procédé selon la revendication 1, comprenant en outre une étape de séchage du rétentat et/ou du perméat obtenu à l'étape (c).

7. Procédé selon la revendication 1, dans lequel la couleur de la composition obtenue à l'étape (c) est différente de la couleur du matériau de départ, en particulier dans lequel la couleur de la composition obtenue à l'étape (c) est sensiblement plus claire que la couleur du matériau de départ.
